# EUROPEAN PATENT SPECIFICATION

(11) **EP 2 485 363 B1**
(45) Date of publication and mention of the grant of the patent: **19.06.2019**
(21) Application number: 11153663.7
(22) Date of filing: 08.02.2011
(51) Int. Cl.: H02J 7/00, H04M 11/00, H04M 1/725

(54) **Disabling a power pack from a host device**
Ferngesteuerte Deaktivierung einer Stromversorgung
Désactivation du bloc d'alimentation d'un dispositif hôte

(43) Date of publication of application: 08.08.2012
(73) Proprietor: BlackBerry Limited, Waterloo, ON N2K 0A7 (CA)
(72) Inventor: Idzik, Jacek S., Waterloo Ontario N2L 3W8 (CA); Litingtun Siong (Shawn), Cambridge Ontario N3E 1A9 (CA); Dikun, Raymond Michael, Waterloo Ontario N2L 5R9 (CA); Franceschini, Vincent Jean-Francois, Waterloo Ontario N2L 5R9 (CA)
(74) Representative: Roberts, Gwilym Vaughan

(56) References cited:
- WO-A2-00/13428
- GB-A- 2 247 577
- US-A1- 2002 057 542
- US-A1- 2003 201 755
- US-A1- 2006 149 966
- US-A1- 2007 123 303
- US-A1- 2007 123 304
- US-A1- 2009 309 745
- US-A1- 2010 207 721
- DALLAS SEMICONDUCTOR: "DS2760 High-Precision Li+ Battery Monitor", , 1 September 2006 (2006-09-01), XP000002658011, Retrieved from the Internet: URL:http://datasheets.maxim-ic.com/en/ds/D S2760.pdf [retrieved on 2011-08-29]

## Description

### BACKGROUND

There are many products and devices containing electronics powered at least in part by a power pack. Often, devices powered by an internal power pack are portable (e.g., a mobile phone). The power pack may be referred to as an internal power pack, which generally connotes that the power pack is carried with the portable electronic device, and typically the device and power pack behave in ordinary usage as a unitary structure. (An internal power pack may be, but need not be, wholly encased within a body of the host portable electronic device.) Generally speaking, an internal power pack may be as portable as the portable electronic device itself. In many portable electronic devices, the power pack (or a portion thereof) can be replaced. One example of an internal power pack is a smart battery. In contrast to an internal power pack (or internal power source), an external power source can include alternating current (AC) line power, DC power from another device, and other generally non-portable power sources.

### SUMMARY

The invention is set out in the appended claims.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates generally a perspective view of an example portable electronic device.
FIG. 2 illustrates generally a block diagram of an example portable electronic device.
FIG. 3 illustrates generally another block diagram of an example portable electronic device.
FIG. 4 illustrates generally a flow chart of an example method for disabling an internal power pack for a portable electronic device.

### DETAILED DESCRIPTION

It has been recognized, among other things, that there may be advantages to disabling an internal power pack that supplies power to a host portable electronic device. As used herein, disabling comprises removing, deactivating or suspending some functionality of a power pack or a portion thereof. Disabling may also include restricting the time or times when functionality may be enabled. Disabling may include shutting down the power pack in its entirety, but disabling may include any number of actions that are short of a complete shutdown. Disabling the internal power pack may in some examples result in reduced functionality of the host portable electronic device as a whole, or may result in a complete shutdown of the device.

Disabling an internal power pack may be useful in several contexts. For example, the internal power pack may be subject to a manufacturer recall. In such a case, a transceiver in the host device can be utilized to receive a command to disable the internal power pack from an external source. In response to the command, the host device can take some action that disables the internal power pack. In some embodiments, the host device may send a signal to the internal power pack causing the internal power pack to disable itself. Disabling the internal power pack in this situation may prompt a user of the portable electronic device to bring the portable electronic device to a point of sale for service (thereby helping make the recall effective). The point of sale could then replace the internal power pack to restore operation of the portable electronic device. As a result, this process would remove the recalled internal power pack from operation. In other examples, the portable electronic device, instead of responding to a command from an external source, may disable the internal power pack due to sensor readings (e.g., temperature, current) from the portable electronic device or internal power pack. In another illustrative application, a host portable electronic device may receive a command to disable the internal power pack when the host device has been stolen or is otherwise being improperly used (e.g., the host device is being used by an unauthorized user).

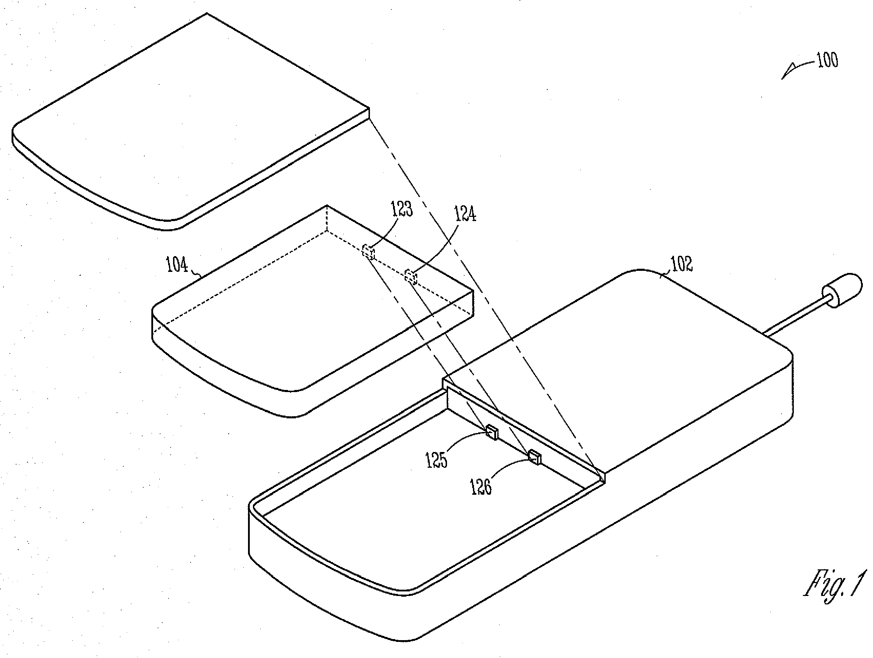

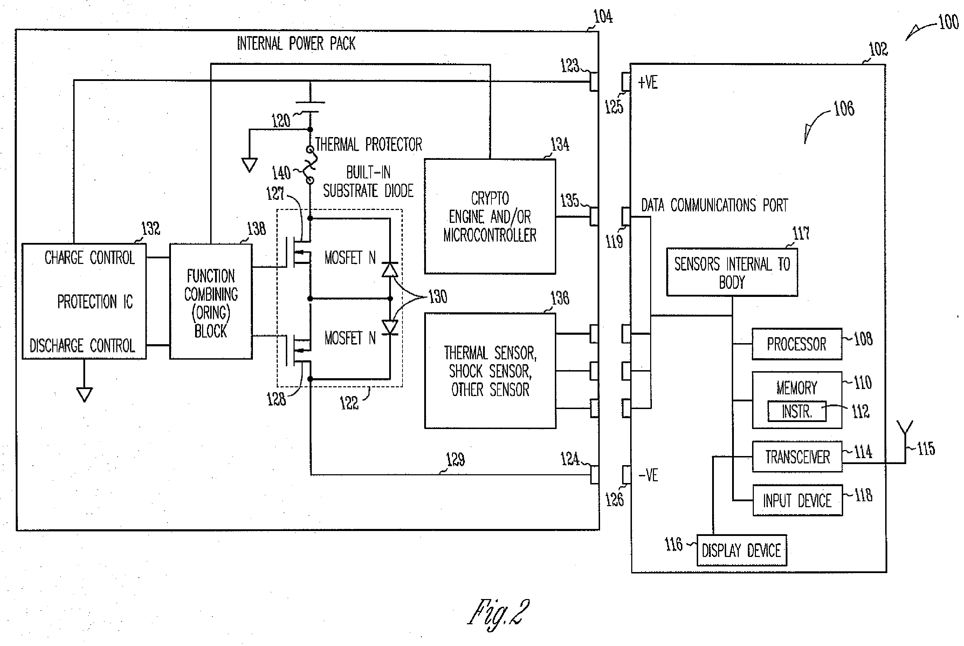

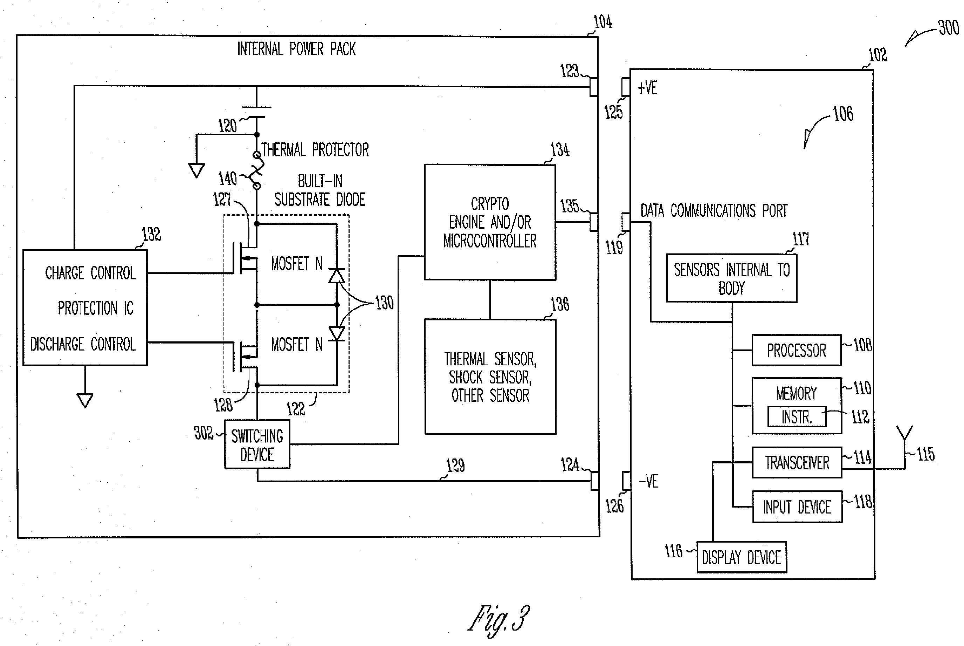

FIG. 1 illustrates generally an example of a portable electronic device 100. The portable electronic device 100 includes a body 102 (also referred to herein as the "host device") and an internal power pack 104. The body 102 comprises an enclosed structure housing a plurality of system components 106 (shown in FIGs. 2 and 3) for implementing the functionality of the portable electronic device 100. The system components 106 can perform (for example) processing, display, audio, wireless transmission, and wireless receiving capabilities, among other things, for the portable electronic device 100.

The internal power pack 104 comprises a portable structure configured to dock with the body 102 and provide power to the system components 106. As used herein, a component is generally "configured" to perform a function when the component is capable of carrying out the function. In an example, the internal power pack 104 and the body 102 are a unitary structure when the internal power pack 104 is docked in the body 102. The internal power pack 104 or a portion thereof is removable from the body 102. In certain examples, therefore, the internal power pack 104 can be removed and replaced by another internal power pack 104. In some examples, the body 102 can be configured to dock with multiple internal power packs 104 simultaneously. In additional examples, a power pack 104 may include power providing components of different kinds, such as a conventional battery and a fuel cell system, or conventional batteries having different battery chemistries. In some embodiments, part of a power pack may be readily removable by a human being (typically without the need for tools), while other parts of the power pack may not be readily removable. In other words, the internal power pack 104 need not be the sole power source for the body 102, and a portion of the power pack may be included in the body 102 and distinct from the internal power pack 104. In the discussion that follows, it will be assumed for simplicity that the principal power source for the body 102 is the internal power pack 104.

The internal power pack 104 includes one or more power providing components 120 (shown in FIGs. 2 and 3) coupled to two power pack terminals 123, 124. In general, "coupling" as used herein refers to a physical relation of components such that coupled components can provide (or supply) power, consume power, or convey power. When the internal power pack 104 is docked in the body 102, each of the power pack terminals 123, 124 contacts a body terminal 125, 126 for coupling the power providing components 120 of the internal power pack 104 to the system components 106 of the body 102. When the internal power pack terminals 123, 124 are in contact with the body terminals 125, 126, the system components 106 can form a complete circuit with the power providing components 120. Accordingly, one pair of contacting terminals (e.g., power pack terminal 123 and body terminal 125) can be considered positive voltage terminals and the other pair of contacting terminals (e.g., power pack terminal 124 and body terminal 126) can be considered the negative voltage terminals. Although FIG. 1 illustrates each terminal 123, 124, 125, 126 as a single contact surface, in other examples, each terminal 123, 124, 125, 126 can comprise multiple contact surfaces. Moreover, the internal power pack 104 and the body 102 can include more than two terminals each in order to, for example, provide separate power paths to different system components 106. As previously indicated, the power providing components may include, but are not limited to, conventional batteries. In an example, the power providing components 120 can include one or more re-chargeable battery cells (e.g., in a smart battery), fuel cells, a fuel tank, or other portable power source. Re-chargeable battery cells can include lithium-ion cells, nickel-cadmium cells, and others. The power providing components 120 can also include one or more battery cells in conjunction with other power sources.

FIG. 2 illustrates generally a block diagram of the portable electronic device 100 showing example components of the body 102 and the internal power pack 104. The system components 106 of the body 102 can include a processor 108 coupled to a memory device 110 having instructions 112 thereon for execution by the processor 108. The processor 108 can include any component capable of executing instructions 112. For example, the processor 108 can include a central processing unit (CPU), a microprocessor, a network processor, microcontroller, or a field programmable gate array (FPGA). As an example, the processor 108 is "configured" to perform a function when the memory 110 includes instructions 112 which, when executed by the processor 108, cause the processor 108 to carry out the function.

The system components 106 can also include a transceiver 114 coupled to an antenna 115 for transmitting and receiving signals from external sources. As used herein, external sources include any signal sources apart from the body 102, the internal power pack 104, or the portable electronic device 100 as a unit. External sources may include any devices, systems, networks, persons, organizations or any other external instrumentalities that originate or convey such a signal. The system components 106 can also include a display device 116 for displaying information for a user, and an input device 118 for receiving information from a user. The input device 118 can be a keypad (for example), or can be incorporated into the display device 116 such as in a touch screen. The body 102 can also include one or more sensors 117 for obtaining information such as temperature, vibration (shock), current magnitude, or other information. The body 102 can also include a data port 119 for communicating with the internal power pack 104.

As mentioned above, the internal power pack 104 includes power providing components 120. The power providing components 120 are coupled between the first power pack terminal 123 and the second power pack terminal 124. The electrical circuit from the first power pack terminal 123 through the power providing components 120 and to the second power pack terminal 124 is referred to herein as the power path 129. The power providing components 120 can provide power to the system components 106 via the power path 129. For example, power can be provided from the power providing components 120 through the contact of the first power pack terminal 123 and the first body terminal 125 to the system components 106; returning from the system components 120 through the contact of the second power pack terminal 124 and the second body terminal 126 to the power providing components 120. The power providing components 120 can also receive charge (e.g., for recharging of battery cells) via the power path 129. Charge can be provided to the first internal power pack terminal 123 by the body 102 and the return link can be made from the power providing components 120 to the body 102 via the second power pack terminal 124.

In addition to the power providing components 120, the internal power pack 104 can include a switching device 122 for selectively coupling the power providing components 120 to the power pack terminals 123, 124. The switching device can include one or more switches 127, 128. The switches 127, 128 are coupled in series between the power providing components 120 and one of the power pack terminals 123, 124. (As used herein, "in series," means substantially in series; two electrical components are substantially in series when all or nearly all current passing through one component passes through the other.) In this example, both switches 127, 128 are coupled between the power providing components 120 and the second power pack terminal 124, however, in other examples, one or both switches 127, 128 can be coupled between the power providing components 120 and the first power pack terminal 123. In yet other examples, where more than two body terminals and/or power pack terminals are present, the two switches 127, 128 can be coupled between the power providing components and one power pack terminal of each pair (e.g., positive and negative) of power pack terminals. Notably, multiple power pack terminals can be coupled to a single power path 129 and, as such, two switches 127, 128 can be used for more than one pair (e.g., positive and negative) of power pack terminals. The first switch 127 can control power propagating into the power providing components 120 to recharge the power providing components 120. The second switch 128 can control power propagating out of the power providing components 120 for use by the system components 106. The first and second switch 127, 128 can include one or more transistors (e.g., field effect transistors (FETs)), relays, or other switching device. Diodes 130 can be used to allow power to propagate in the reverse direction around the respective switches 127, 128 (e.g. for use with transistor switches).

The switches 127, 128 are controlled in part by a protection integrated circuit (IC) 132. The protection IC 132 can, for example, protect the internal power pack 104 from damage due to over discharging or overcharging. For example, to protect the power providing components 120 from overcharging, the protection IC 132 can set the switch 127 to a non-conducting state when the voltage of the power providing components 120 reaches to a high threshold. With the switch 127 in a non-conducting state, power cannot propagate into the power providing components 120 from the power pack terminals 123, 124. To protect the power providing components 120 from being over discharged or from damage due to an over-current situation, the protection IC 132 can set the switch 128 to a non-conducting state when the voltage of the power providing components 120 reaches a low threshold or when the current propagating from the power providing components 120 reaches a high threshold. With the switch 128 in a non-conducting state, power cannot propagate from the power providing components 120 to the power pack terminals 123, 124.

The internal power pack 104 can also include a microcontroller 134 coupled to a communications port 135 for communicating with the body 102 via the body communications port 119. In some examples, the microcontroller 134 can have an associated cryptography engine for authenticating the internal power pack 104 with the body 102 (authenticating may include any technique for checking whether the internal power pack 104 is of a correct or authorized kind). The microcontroller 134 can also control the charging and discharging of the power providing components 120. In an example, the microcontroller 134 controls the charging and discharging by controlling the switches 127, 128. Thus, the control of the switches 127, 128 can be shared by the microcontroller 134 and the protection IC 132. The control signals from the microcontroller 134 and the control signals from the protection IC 132 can be combined (e.g., in a logical OR) by the logic 138. In an example, the switches 127, 128 can default to a conducting state unless either the protection IC 132 or the microcontroller 134 commands a switch 127, 128 to a non-conducting state. The switches 127, 128 can be set to a non-conductive state when either a disable signal from the microcontroller 134 or a signal from the protection IC 132 to set one of the switches 127, 128 to a non-conducting state is sent to the logic 138. In some examples, the microcontroller 134 can send two separate signals, one for each switch 127, 128 to the logic 138 in order to separately disable the power providing devices 120 from providing power or receiving power. In other examples, the functionality provided by the protection IC 132 and the microcontroller 134 can be performed by one or more other processors (e.g., a CPU, microprocessor, network processor, microcontroller, or FPGA) on the internal power pack 104. As an example, the microcontroller 134 is "configured" to perform a function when the microcontroller 134 includes instructions which, when executed by a processor of the microcontroller 134, cause the microcontroller 134 to carry out the function.

The internal power pack 104 can also include one or more sensors 136 that obtain information regarding the internal power pack 104, such as temperature, vibration (shock), and current, and convey the information to the body 102. The internal power pack 104 can also include a thermal protector fuse 140 for protecting the circuit from extreme over-current or heat situations.

In an example, the portable electronic device 100 can be configured to operate in accordance with one or more frequency bands and/or standards profiles including a Global System for Mobile Communications (GSM), 3rd Generation Partnership Project (3GPP), 3rd Generation Partnership Project 2 (3GPP2), or an Institute of Electrical and Electronics Engineers (IEEE) standard. Example standards include an Enhanced Data rates for GSM Evolution (EDGE) (also referred to as Enhanced General Packet Radio Service (EGPRS)) standards profile, Worldwide Interoperability for Microwave Access (WiMAX) standards profiles (e.g., IEEE 802.16 standards), a WCDMA standards profile, a 3G HSPA standards profile, and a Universal Terrestrial Radio Access Network (UTRAN) Long Term Evolution (LTE) standards profile.

Examples of the portable electronic device 100 include a personal digital assistant (PDA), a laptop computer, a web tablet, a net-book, a wireless telephone, a wireless headset, a pager, an instant messaging device, a digital camera, an access point, a television, a medical device (e.g., a heart rate monitor, a blood pressure monitor, etc.), a remote control, or other electronic device. The electronic device may be handheld, that is, sized and shaped to be held or carried in a human hand.

FIG. 3 illustrates another example of a portable electronic device 300. The portable electronic device 300 includes many of the same components as described with respect to the portable electronic device 100, where similar components are referred to by the same numerals. In the portable electronic device 300, the protection IC 132 controls the switches 127, 128 in a similar manner to that described with respect to FIG. 2. The microcontroller 134, however, controls the charging and discharging of the power providing components 120 with a third switching device 302 separate from the first and second switches 127, 128. The third switching device 302 can include one or more transistors (e.g., a field effect transistor (FET)), relays, fuse, or other switching devices. As shown the third switching device 302 is coupled in series with the first and second switches 127, 128. The third switching device 302 can be configured to selectively open circuit the power path 129 between the power providing components 120 and the system components 106.

Additionally, in the portable electronic device 300, the one or more optional sensors 136 on the internal power pack 104 are coupled to the microcontroller 134. Thus, the one or more sensors 136 can convey information to the microcontroller 134. In an example, the microcontroller 134 receives the information from the one or more sensors 136 and conveys this information to the processor 108 via the communications port 135. Although in this example, the one or more sensors 136 are not coupled to data ports to convey information to the body 102 (as shown in FIG. 2), in other examples, the one or more sensors 136 are coupled to data ports to convey information to the body 102 in addition to being coupled to the microcontroller 134.

Although specific embodiments are illustrated and described, it should be understood that components of the portable electronic device 300 can be implemented in addition to, or instead of, corresponding components in the portable electronic device 100. For example, the switching device 302 can be implemented in the portable electronic device 100 such that the microcontroller 134 would control the switching device 302 instead of the switches 127, 128.

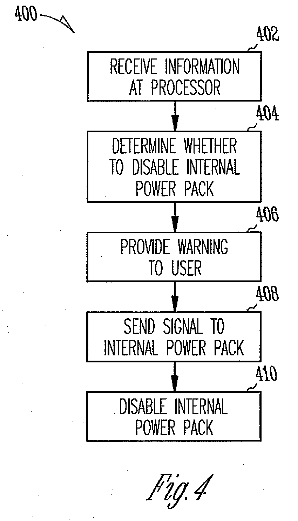

FIG. 4 illustrates an example of a method 400 for disabling an internal power pack 104 for a portable electronic device 100, 300. In an example, disabling the internal power pack 104 includes open circuiting the power path 129 between the power providing devices 120 and the power pack terminals 123, 124. The power path 129 for the power providing device 120 can be open circuited by setting one or more switching devices 122, 302 to a non-conductive state.

The method 400 comprises receiving information regarding the internal power pack 104 at the processor 108 (block 402), and determining whether to disable the internal power pack 104 based on the information (block 404). According to the invention, when the processor 108 determines that the internal power pack 104 should be disabled, a warning is provided to a user of the portable electronic device 100, 300 (block 406) prior to disabling the internal power pack 104. The warning may comprise a visual warning, such as a text message on a display device 116 informing the user that the internal power pack is to be disabled. The warning may supply the user with additional information, such as the reason for disabling, what the user should do, the time when the disabling will take place (disabling may, but need not, take place promptly; disabling may be brought about after a period of time has elapsed), the practical effects associated with the disabling, and so on. The warning may also optionally include a prompt that asks the user to acknowledge (e.g., via an input device 118) that the user has read and understood the warning. To disable the internal power pack 104 (which, as previously indicated, may but need not take place promptly after making the determination to disable), the processor 108 sends a signal from the body 102 to the internal power pack 104 (block 408). The signal can be received by the microcontroller 134, which, in response thereto, disables the internal power pack 104 (block 410). Disabling may be accomplished by, for example, setting one or more switching devices 122, 302 in the power path 129 of the power providing devices 120 to a non-conductive state.

The method 400 begins at block 402, where the processor 108 receives information regarding disabling the internal power pack 104. The information received by the processor 108 may be from an internal or external source. In an example, the information can include data from the sensors 136 on the internal power pack 104 and/or data from the sensors 117 on the body 106. For example, a temperature sensor 136 on the internal power pack 104 can obtain a temperature reading from the power providing components 120 and convey data regarding the temperature to the processor 108 on the body 102.

The information received by the processor 108 can also include a command from an external source (e.g., entity). The command can be received as a wireless signal via the antenna 115, or as a line-based signal on a physical communication interface (e.g., an internet protocol (IP) interface) of the portable electronic device 100, 300. In an example, the command can instruct the portable electronic device 100, 300 to disable the internal power pack 104. When determining whether to disable the internal power pack, the processor 108 may analyze or authenticate the received information, to determine whether the external source has the authority to instruct the portable electronic device 100, 300 to disable the internal power pack 1 According to the invention, the external source comprises a network entity in a communications network to which the portable electronic device 100, 300 is communicatively coupled. For example, the portable electronic device 100, 300 may be connected to a communications network having a service provider that provides voice and/or data communications to the portable electronic device 100, 300. The external source can comprise, for example, a core network server (e.g., an operations center). In general, "communicatively coupled" as used herein refers to components or devices in a communicative relationship such that a first component or device can send and/or receive signals to/from another component or device to which the first component or device is communicatively coupled.

At block 404, the processor 108 determines whether to disable the internal power pack 104 based on the information received. The processor 108 may disable the internal power pack 104 for various reasons. In an example, the processor 108 determines whether to disable the internal power pack 104 based on data from the sensors 136 and/or sensors 117. In another example, the processor 108 can determine whether to disable the internal power pack 104 based on whether the temperature of the power providing components 120 is above a threshold. If, for example, the data from sensors 136 and/or 117 pertains to a high temperature of a power providing component 120, and if this high temperature may result in a high temperature of the body 102, the processor 108 may determine to disable the internal power pack to prevent the body from becoming too hot. Accordingly, the processor 108 can help protect the internal power pack 104 from damage due to excessive heating and/or excessive shock to the internal power pack 104, among other things.

According to the invention, the processor 102 disables the internal power pack 104 based on a command received from an external source. In an example, the processor 108 automatically determines that it should disable the internal power pack 104 when a command is received from an authorized external source instructing the processor 108 to disable the internal power pack 104. In other examples, other criteria (e.g., sensor data) can be considered in addition to a received command when determining when to disable the internal power pack 104.

An external source may send a command to disable the internal power pack 104 for various reasons. For example, an external entity may desire to disable the internal power pack 104 due to manufacturer recalls of the internal power pack 104 or one or more of the system components 106, emergency situations (e.g., when the portable electronic device 100, 300 is stolen), parental control of the portable electronic device 100, 300, and other reasons. Accordingly, to effectuate these desires, an external source (e.g., under the control of the network provider or other entity) can send a command to the portable electronic device 100, 300. In some examples, the service provider for the communications network may be the same entity that sells the portable electronic device 100, 300 for use on the service provider's network.

In the event of a manufacturer recall, a user of the portable electronic device 100, 300 may be notified of a recall, told a reason for the recall, what needs to be done, names of dealers who can provide the service, and whether there will be any money charged for the service. If the user ignores the recall and does not return the portable electronic device 100, 300 and/or the internal power pack 104, the service provider may choose to disable the internal power pack 104 in an attempt to cause the user to bring the portable electronic device 100, 300 and/or the internal power pack 104 in for service.

Prior to sending a command to a portable electronic device 100, 300, an external entity may desire to identify which portable electronic device(s) 100, 300 of a plurality should receive a command. For example, the external entity may identify a specific portable electronic device 100, 300 and/or a specific internal power pack 104 that has been recalled (or is otherwise to be disabled). Portable electronic devices 100, 300 can be identified based on sales records and/or other information regarding the portable electronic device 100, 300. For example, a media access control (MAC) address for the portable electronic device 100, 300 can be linked with a user, an internal power pack 104, and or specific components 106, via information in a table on a network server. The table can be populated based on sales records and/or information provided by the portable electronic device 100, 300 during network authentication or specific query by the network server. In some examples, the portable electronic device 100, 300 can provide specific component 106 and/or internal power pack 104 information (e.g., a serial number) to the network server. The network server can then determine that the internal power pack 104 should be disabled based on the information provided (e.g., by comparing the serial number to a range of recalled serial numbers). Once the portable electronic device 100, 300 has been identified, the network server can send a command to the portable electronic device 100, 300 to disable the internal power pack 104.

At block 406, a warning may be optionally provided to a user and/or technician of the portable electronic device 100, 300, once the processor 108 determines that the internal power pack 104 should be disabled. As previously indicated, the warning may be of any kind. The warning can be provided by any means sufficient to convey information to a user. For example, a text or image warning can be shown on the display device 116, an audible tone or speech can be provided from a speaker, or a light (e.g., a power light) on the portable electronic device 100, 300 can be set to blink with a certain code. In some implementations, the device 100, 300 may vibrate or generate another type of tactile warning. In an example, a first warning can be provided to the user 1 minute prior to disabling the internal power pack 104, and a second warning can be provided 10 seconds prior to disabling the internal power pack 104. In other examples, a warning can be provided one day, one week, or longer prior to disabling the internal power pack 104. It should be understood that these time periods and warning methods are merely examples, and the subject matter described herein is not limited to any particular time period or warning method.

At block 408, the processor 108 sends a signal to the internal power pack 104 to disable the internal power pack 104. The signal can be sent through the body communications port 119 to the communications port 135 of the internal power pack 104 and on to the microcontroller 134. In an example, the signal from the processor 108 stores a value in a register of the microcontroller 134. For example, the signal from the processor 108 can store a first value (e.g., a "1") in the register of the microcontroller 134 when the microcontroller 134 is to disable the internal power pack 104. The register can have a second value (e.g., a "0") stored therein when the microcontroller 134 is to enable (or maintain as enabled) the internal power pack 104. It should be understood that these register values are merely examples and the subject matter described herein is not limited to any particular register value to enable or disable the internal power pack 104.

At block 410, the microcontroller 134 disables the internal power pack 104 in response to the signal from the processor 108. In the portable electronic device 100 of FIG. 2, for example, the microcontroller 134 disables the internal power pack 104 by setting both switch 127 and switch 128 to a non-conductive state. In the portable electronic device 300 of FIG. 3, the microcontroller 134 can disable the internal power pack 104 by setting the switching device 302 to a non-conductive state. Accordingly, the power path 129 is open-circuited and the power providing components 120 are prevented from receiving power from the power pack terminals 123, 124 and from sending power to the power pack terminals 123, 124. Open circuiting the power path 129 causes the system components 106 to not receive power from the internal power pack 104, and the power providing components 120 (e.g., battery cells) cannot be re-charged by a charging device. If, for example, the switching device 302 is a fuse, the microcontroller 134 can blow the fuse to disable the internal power pack 104. In other examples, the internal power pack 104 can be disabled by preventing the power providing components 120 from providing power to the internal power pack terminals 123, 124, while still allowing the power providing components 120 to receive power from the internal power pack terminals 123, 124. This can be accomplished by setting the second switch 128 to a non-conductive state, while leaving the first switch 127 in a conductive state. In yet other examples, the internal power pack 104 can be disabled by preventing the power providing components 120 from receiving power, while allowing the power providing components 120 to provide power.

In certain examples, the microcontroller 134 can independently determine whether to disable the internal power pack 104. The determination by the microcontroller 134 can be made based on data from the one or more sensors 136 and/or commands from the processor 108. For example, the microcontroller 134 may disable the internal power pack 104 when both a signal has been received from the processor 108 instructing the microcontroller 134 to disable the internal power pack 104, and a capacity level for power providing components 120 has dropped to a certain threshold. In yet other examples, the microcontroller 134 can disable the internal power pack 104 based on data from the one or more sensors 136 regardless of a signal from the processor 108.

Notably, in the examples above, when the internal power pack 104 is disabled, use of the power providing components 120 is limited; however, communications between the microcontroller 134 and external components (e.g., the body 102) may still be enabled via the communications port 135. This, for example, can enable the internal power pack 104 to be re-enabled at a later time by storing the second value in the register of the microcontroller 134 According to the invention, the internal power pack 104 can only be re-enabled by use of a testing device, such as, by disconnecting the internal power pack 104 from the body 102 and docking the internal power pack 104 with the testing device. Additionally, since the internal power pack 104 is disabled internally and not on the body 102, a disabled internal power pack 104 can be replaced with an enabled internal power pack 104 which can immediately provide power to the body 102 with minimal action from the body 102. That is, the internal power pack 104 can be disabled, but the body 102 and the system components 106 thereon can remain fully enabled; free to receive power from any suitable enabled internal power pack 104.

The methods and systems described above can be used by a service provider (an example of an external source) to remotely disable an internal power pack 104 installed in a portable electronic device 100, 300. Since the typical use of the portable electronic device 100, 300 may be in a portable state where the portable electronic device 100, 300 operates using power provided by the internal power pack 104, disabling the internal power pack 104 may cause the portable electronic device 100, 200 to shut down and not operate.

Although the concepts discussed above are described for simplicity in terms of a portable electronic device 100, 300, the concepts may be applicable to other products and devices (not all of them necessarily being handheld) having internal power packs 104. For example, the concepts may be applicable to electric or hybrid electric vehicles operating, in part, off of one or more internal power packs 104. The body portion of the vehicle can include a processor that can receive signals from external sources via a transceiver, such as from an in-vehicle communications system. The concepts may also be applicable to wireless power tools, wireless sensors, wireless machines (e.g., lawnmowers), or any other product or device that includes an internal power pack 104. To receive signals from an external source, some of the products or devices may need to be equipped with a transceiver and/or other communication circuitry to perform the above described functionality.

### Example Embodiments

Example 1 includes a method for disabling an internal power pack. The method includes receiving a command from an external source at a processor for the portable electronic device, the command instructing the portable electronic device to disable an internal power pack for the portable electronic device. The processor sends a signal to the internal power pack to disable the internal power pack in response to the command.

In Example 2, the subject matter of Example 1 can optionally include providing a warning to a user of the portable electronic device indicating that the internal power pack is to be disabled. Additionally, the processor can wait for a period of time after receiving the command from the external source before sending the signal.

In Example 3, the subject matter of any one of examples 1-2 can optionally include disabling the internal power pack from both charging and discharging.

In Example 4, the subject matter of any one of examples 1-3 can optionally include disabling the internal power pack by open circuiting a power path between a power providing component of the internal power pack and terminals of the internal power pack.

In Example 5, the subject matter of any one of examples 1-4 can optionally include the signal from the processor storing a value in a register for a another processor on the internal power pack.

In Example 6, the subject matter of any one of examples 1-5 can optionally include the internal power pack including at least one of a battery cell, a fuel cell, and a fuel tank.

In Example 7, the subject matter of any one of examples 1-6 can optionally include the portable electronic device communicatively coupled to a network, wherein the external source comprises a network device communicatively coupled to the network.

Example 8 includes a portable electronic device comprising a processor configured to receive a command from an external source, the command instructing the portable electronic device to disable an internal power pack for the portable electronic device. The processor is also configured to send a signal to the internal power pack to disable the internal power pack in response to the command.

In Example 9, the subject matter of example 8 can optionally include a body comprising a structure housing the processor, a display, and an input device, wherein the internal power pack can be docked with the body. Additionally, the internal power pack can be configured to provide power to the processor, display, and the input device.

In Example 10, the subject matter of any one of examples 8-9 can optionally include the internal power pack including a power providing component configured to provide power to the body via a power path. The internal power pack can be configured to open circuit the power path in response to the signal from the processor.

In Example 11, the subject matter of any one of examples 8-10 can optionally include the power providing component including at least one of a battery cell, a fuel cell, and a fuel tank.

In Example 12, the subject matter of any one of examples 8-11 can optionally include the signal from the processor configured to store a value in a register for a processor on the internal power pack.

In Example 13, the subject matter of any one of examples 8-12 can optionally include the portable electronic device communicatively coupled to a network, wherein the external source comprises a network device communicatively coupled to the network.

Example 14 includes a machine-readable medium including instructions, which when executed by the machine, cause the machine to perform operations. The operations include determining whether an internal power pack for the machine should be disabled and sending a signal to the internal power pack to disable the internal power pack.

In Example 15, the operations of Example 14 can optionally include receiving a command from an external source to disable the internal power pack. Wherein determining includes determining based on the command whether the internal power pack should be disabled.

In Example 16, the operations of any one of examples 14-15 can optionally include receiving data from at least one sensor on the internal power pack, wherein determining includes determining based on the data whether the internal power pack should be disabled.

Example 17 includes an internal power pack for docking with a body of a portable electronic device and providing power to system components in the body. The internal power pack includes a power providing component and a terminal configured to contact a corresponding terminal on the body. The internal power pack also includes a switching device coupled in series between the power providing component and the terminal of the internal power pack. The switching device is configured to be set to a non-conductive state in response to a signal from the system components.

In Example 18, the subject matter of example 17 can optionally include the switching device configured to open circuit the power path between the power providing component and the terminal.

In Example 19, the subject matter of any one of examples 17-18 can optionally include a first processor configured to communicate with a second processor in the body of the portable electronic device, wherein the first processor is configured to set the switching device to a non-conductive state in response to a signal from the second processor.

In Example 20, the subject matter of any one of examples 17-19 can optionally include a protection integrated circuit (IC) configured to protect the internal power pack from over-charging or over-discharging.

### Additional Notes

The above detailed description includes references to the accompanying drawings, which form a part of the detailed description. The drawings show, by way of illustration, specific embodiments in which the described concepts can be practiced. These embodiments are also referred to herein as "examples." Such examples can include elements in addition to those shown or described, while other examples may include only those elements shown or described. Moreover, also it is contemplated that this disclosure may pertain to examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, the code may be tangibly stored on one or more volatile or non-volatile computer-readable media during execution or at other times. These computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

Various benefits may be realized by implementation of one or more embodiments. Some of the potential advantages have been mentioned already. As noted above, there are many possible kinds of power packs, and the concepts may be configured to work with many or all of them. Further, flexibility in implementation maybe supported. In the case of portable electronic devices that are handheld, many of the embodiments can be implemented with physical components that are small and lightweight, which may be desirable qualities for handheld devices.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment.

## Claims

1. A method comprising:
receiving a command from an external source at a processor (108) for a portable electronic device (100), the command instructing the portable electronic device (100) to disable an internal power pack (104) for the portable electronic device (100), wherein the portable electronic device (100) is communicatively coupled to a network, wherein the external source comprises a network device communicatively coupled to the network;
providing a warning indicating that the internal power pack is to be disabled;
sending a signal from the processor (108) to the internal power pack (104) to disable the internal power pack (104) in response to the command such that a system component (106) of the portable electronic device (100) remains enabled and free to receive power from an enabled power source, wherein the internal power pack (104) can only be re-enabled by a testing device external to the body of the portable electronic device (100); and
waiting for a period of time after receiving the command from the external source before sending the signal.

2. The method of claim 1, further comprising:
receiving data from at least one sensor (136) on the internal power pack; and
determining, based on the data, whether the internal power pack should be disabled;
wherein sending a signal is based on the determining.

3. The method of any one of claims 1-2, comprising:
disabling the internal power pack from both charging and discharging.

4. The method of any one of claims 1-3, comprising:
disabling the internal power pack by open circuiting a power path between a power providing component of the internal power pack and terminals (123, 124) of the internal power pack.

5. The method of any one of claims 1-4, wherein the internal power pack includes at least one of a battery cell, a fuel cell, and a fuel tank.

6. A portable electronic device (100) comprising:
a body (102) comprising a structure housing a processor (108), a display (116), and an input device (118), wherein the body (102) is configured to have an internal power pack (104) docked thereto; and
the processor (108) configured to implement the method of any of claims 1 to 5.

7. A machine-readable medium including instructions, which when executed by the machine (100), cause the machine (100) to perform a method according to any one of claims 1 to 5.

## Patentansprüche

1. Verfahren, das Folgendes umfasst:
Empfangen eines Befehls von einer externen Quelle bei einem Prozessor (108) für eine tragbare elektronische Vorrichtung (100), wobei der Befehl die tragbare elektronische Vorrichtung (100) anweist, eine interne Stromversorgung (104) für die tragbare elektronische Vorrichtung (100) abzuschalten, wobei die tragbare elektronische Vorrichtung (100) mit einem Netz kommunikationstechnisch verbunden ist und die externe Quelle eine Netzeinrichtung, die mit dem Netz kommunikationstechnisch verbunden ist, umfasst;
Bereitstellen einer Warnung, die anzeigt, dass die interne Stromversorgung abgeschaltet werden wird;
Senden eines Signals vom Prozessor (108) zur internen Stromversorgung (104), um die interne Stromversorgung (104) als Antwort auf den Befehl abzuschalten, derart, dass eine Systemkomponente (106) der tragbaren elektronischen Vorrichtung (100) aktiviert bleibt und Leistung von einer aktivierten Leistungsquelle empfangen kann, wobei die interne Stromversorgung (104) lediglich durch eine Prüfeinrichtung außerhalb des Gehäuses der tragbaren elektronischen Vorrichtung (100) erneut aktiviert werden kann; und
Warten für einen Zeitraum nach dem Empfangen des Befehls von der externen Quelle, bevor das Signal gesendet wird.

2. Verfahren nach Anspruch 1, das ferner Folgendes umfasst:
Empfangen von Daten von mindestens einem Sensor (136) an der internen Stromversorgung und
Bestimmen auf der Grundlage der Daten, ob die interne Stromversorgung abgeschaltet werden soll; wobei
das Senden eines Signals auf der Grundlage des Bestimmens erfolgt.

3. Verfahren nach einem der Ansprüche 1-2, das Folgendes umfasst:
Abschalten der internen Stromversorgung sowohl für Laden als auch für Entladen.

4. Verfahren nach einem der Ansprüche 1-3, das Folgendes umfasst:
Abschalten der internen Stromversorgung durch unterbrechen eines Leistungspfads zwischen einer leistungsbereitstellenden Komponente der internen Stromversorgung und Anschlüssen (123, 124) der internen Stromversorgung.

5. Verfahren nach einem der Ansprüche 1-4, wobei die interne Stromversorgung eine Batteriezelle, eine Brennstoffzelle und/oder einen Brennstofftank enthält.

6. Tragbare elektronische Vorrichtung (100), die Folgendes umfasst
ein Gehäuse (102), das einen Aufbau umfasst, in dem ein Prozessor (108), eine Anzeigevorrichtung (116) und eine Eingabevorrichtung (118) untergebracht sind, wobei das Gehäuse (102) konfiguriert ist, eine interne Stromversorgung (104) aufzuweisen, die an ihm angekoppelt ist; und
der Prozessor (108) konfiguriert ist, das Verfahren nach einem der Ansprüche 1 bis 5 zu implementieren.

7. Maschinenlesbares Medium, das Anweisungen enthält, die, wenn sie durch eine Maschine (100) ausgeführt werden, bewirken, dass die Maschine (100) ein Verfahren nach einem der Ansprüche 1 bis 5 ausführt.

## Revendications

1. Procédé comprenant les étapes consistant à :
recevoir une instruction à partir d'une source externe au niveau d'un processeur (108) pour un dispositif électronique portable (100), l'instruction ordonnant au dispositif électronique portable (100) de désactiver un bloc d'alimentation interne (104) pour le dispositif électronique portable (100), où le dispositif électronique portable (100) est couplé de manière communicative à un réseau, où la source externe comprend un dispositif de réseau couplé de manière communicative au réseau ;
fournir un avertissement indiquant que le bloc d'alimentation interne doit être désactivé ;
envoyer un signal à partir du processeur (108) au bloc d'alimentation interne (104) pour désactiver le bloc d'alimentation interne (104) en réponse à l'instruction de sorte qu'un composant de système (106) du dispositif électronique portable (100) reste activé et libre de recevoir de la puissance à partir d'une source d'alimentation activée, où le bloc d'alimentation interne (104) peut uniquement être réactivé par un dispositif de test externe au corps du dispositif électronique portable (100) ; et
attendre une certaine durée après avoir reçu l'instruction à partir de la source externe avant d'envoyer le signal.

2. Procédé de la revendication 1, comprenant en outre les étapes consistant à :
recevoir des données à partir d'au moins un capteur (136) sur le bloc d'alimentation interne ; et
déterminer, en fonction des données, si le bloc d'alimentation interne doit être désactivé ;
dans lequel l'envoi d'un signal est basé sur l'étape de détermination.

3. Procédé de l'une quelconque des revendications 1 et 2, comprenant l'étape consistant à :
désactiver à la fois la charge et la décharge du bloc d'alimentation interne.

4. Procédé de l'une quelconque des revendications 1 à 3, comprenant l'étape consistant à :
désactiver le bloc d'alimentation interne par ouverture de circuit d'un chemin d'alimentation entre un composant fournissant de la puissance du bloc d'alimentation interne et des bornes (123, 124) du bloc d'alimentation interne.

5. Procédé de l'une quelconque des revendications 1 à 4, dans lequel le bloc d'alimentation interne comporte au moins l'un d'un élément de batterie, d'une pile à combustible et d'un réservoir à combustible.

6. Dispositif électronique portable (100) comprenant :
un corps (102) comprenant une structure recevant un processeur (108), une unité d'affichage (116), et un dispositif d'entrée (118), où le corps (102) est configuré pour avoir un bloc d'alimentation interne (104) accueilli dans celui-ci ; et
le processeur (108) configuré pour mettre en oeuvre le procédé de l'une des revendications 1 à 5.

7. Support lisible par machine comportant des instructions qui, lorsqu'elles sont exécutées par la machine (100), amènent la machine (100) à réaliser un procédé selon l'une quelconque des revendications 1 à 5.
